# EUROPÄISCHE PATENTSCHRIFT

(11) **EP 2 448 082 B1**
(45) Veröffentlichungstag und Bekanntmachung des Hinweises auf die Patenterteilung: **03.07.2019**
(21) Anmeldenummer: 11183436.2
(22) Anmeldetag: 30.09.2011
(51) Int. Cl.: H02J 7/00, H02J 13/00

(54) **Batteriesystem sowie Verfahren zur Überwachung eines Ladezustandes mindestens einer wiederaufladbaren Batterie**
Battery system and method for monitoring a charge of at least one rechargeable battery
Système de batterie et procédé de surveillance d'un état de charge d'au moins une batterie rechargeable

(30) Priorität: 02.11.2010 DE 102010060305
(43) Veröffentlichungstag der Anmeldung: 02.05.2012
(60) Teilanmeldung: 19154654.8
(73) Patentinhaber: INTILION GmbH, 08056 Zwickau (DE)
(72) Erfinder: Winkler, Norman, 08058 Zwickau (DE); Trantow, Sören, 09112 Chemnitz (DE); Lehmann, Gerhard, 79367 Weisweil (DE); Reinhold, Stefan, 08058 Zwickau (DE)
(74) Vertreter: Vogel, Andreas

(56) Entgegenhaltungen:
- DE-T2- 69 823 204
- US-A1- 2007 001 651
- US-A1- 2010 013 439
- US-A1- 2010 261 048
- US-B2- 7 576 518
- Christoph Brönnimann: "Technische Grundlagen zur LonWorks Technologie", , 24 March 2010 (2010-03-24), pages 1-31, XP055289068, Retrieved from the Internet: URL:http://www.lonmark.ch/pdf/Technische-G rundlagen.pdf [retrieved on 2016-07-18]
- Lipinski Et Al.: "LonWorks", , 25 January 2008 (2008-01-25), XP055489728, ITWissen.info Retrieved from the Internet: URL:https://www.itwissen.info/LonWorks.htm l [retrieved on 2018-07-03]
- Margaret Rouse: "Home > Netzwerk-Design > Peer-to-Peer (P2P) Peer-to-Peer (P2P)", , 1 September 2005 (2005-09-01), XP055489750, Retrieved from the Internet: URL:https://www.searchnetworking.de/defini tion/Peer-to-Peer-P2P [retrieved on 2018-07-03]

## Beschreibung

Die Erfindung betrifft ein Batteriesystem mit mindestens einer wiederaufladbaren Batterie, die mehrere Energiespeichermodule aufweist. Zudem betrifft die Erfindung ein Verfahren zur Überwachung eines Ladezustandes mindestens einer wiederaufladbaren Batterie innerhalb eines Batteriesystems.

In der DE 698 23 204 T2 ist ein fehlertolerantes Batteriesystem offenbart, welches eine Netzwerkarchitektur zwischen Batterien verwendet. Hierbei weist das Batteriesystem mehrere in Reihe geschaltete Energiespeichermodule auf, wobei jedes der Module jeweils mehrere Energiespeichereinheiten aufweist. Zudem weist das Netzwerk mehrere Kontrolleinheiten auf, wobei jeder der mehreren Kontrolleinheiten mit einem Energiespeichermodul verbunden ist. Ferner ist ein Hauptcomputer vorgesehen, der die Kontrolleinheiten miteinander verbindet, wobei der Hauptcomputer die Energiespeichermodule überwacht und steuert. Dieses Hardwarekonzept der Module stellt eine Master-Slave-Systemarchitektur dar, die in vieler Hinsicht, insbesondere bei der Überwachung eines Ladezustandes von wiederaufladbaren Batterien nachteilig ist. Nachteilig ist hier, dass immer der übergeordnete Hauptcomputer, insbesondere ein Batteriecontroller zum Betreiben des Batteriesystems notwendig ist. Das bedeutet, dass auch ein einziges Energiespeichermodul jeder Batterie mit einem Mastercontroller ausgeliefert werden muss. Ansonsten ist es nicht ausreichend kompatibel zum vorliegenden Batteriesystem. Ferner hat es sich gezeigt, dass der sichere Betrieb des Batteriesystems nicht gewährleistet werden kann, wenn konventionelle Energiespeichermodule ohne die entsprechende Intelligenz zu großen Systemen parallel und in Serie verschaltet werden. Insbesondere die Parallelisierung von Energiespeichermodulen sowie von Einzelzellen ist problematisch und aus den unterschiedlichen Systemspannungen können hohe Ausgleichströme resultieren, die die verbauten Zellen innerhalb des jeweiligen Energiespeichermoduls irreparabel schädigen können. Weiterer Stand der Technik ist in US 2010/013439 A1, US 7576 518 B2 und US 2010/261048 A1 genannt.

Aufgabe der vorliegenden Erfindung ist es, die oben genannten Nachteile zu vermeiden, insbesondere ein Batteriesystem sowie ein Verfahren zur Überwachung eines Ladezustandes von wiederaufladbaren Batterien bereitzustellen, insbesondere ein sicheres und einfaches Überwachen von wiederaufladbaren Batterien zu schaffen.

Die Aufgabe wird durch sämtliche Merkmale des Patentanspruches 1 bzw. des Patentanspruches 10 gelöst. In den abhängigen Patentansprüchen sind mögliche Ausführungsformen eines erfindungsgemäßen Batteriesystems beschrieben.

Es ist ein Batteriesystem mit mindestens einer wiederaufladbaren Batterie vorgesehen, die mehrere Energiespeichermodule aufweist, sowie Kontrolleinheiten, wobei jedes Energiespeichermodul eine Kontrolleinheit aufweist. Zudem ist ein Netzwerk vorgesehen, mit dem die Kontrolleinheiten miteinander derart verbunden sind, dass die Kontrolleinheiten eine Master-Master-Systemarchitektur innerhalb des Netzwerkes bilden. Der wesentliche Vorteil der Erfindung ist, dass sämtliche Energiespeichermodule über ihre jeweilige Kontrolleinheit über die Master-Master-Systemarchitektur des Netzwerkes verbunden sind und keine übergeordnete Kontrolleinheit benötigen. Hierdurch lässt sich ein sicheres Parallelisieren von Energiespeichermodulen ohne ein vorheriges Angleichen des Ladezustandes auf einfache Art und Weise realisieren. Ein weiterer Vorteil der Erfindung ist, dass jedes einzige Energiespeichermodul zu einem nahezu beliebigen Batteriesystem verbunden werden kann. Bei der erfindungsgemäßen Master-Master-Systemarchitektur der Kontrolleinheiten wird eine Überwachung der jeweiligen Ladezustände der einzelnen Energiespeichermodule durch die Energiespeichermodule selbst realisiert. Hierbei erfolgt eine direkte Kommunikation der einzelnen Kontrolleinheiten miteinander. Hierzu sendet jede Kontrolleinheit jedes einzelnen Energiespeichermoduls zyklisch entsprechende Daten, wie zum Beispiel Ladezustand, Spannungswert etc. an das Netzwerk, diese Daten werden von jeder Kontrolleinheit der vorhandenen Energiespeichermodule erfasst. Anschließend kann die Kontrolleinheit jedes Energiespeichermoduls autark entscheiden, inwieweit während des Ladens oder des Entladens der Batterie das Energiespeichermodul im Gesamtsystem sich zuschaltet oder sich abschaltet.

Erfindungsgemäß kann vorgesehen sein, dass das Netzwerk ein Bussystem aufweist, das von jedem Energiespeichermodul mit Energie versorgbar ist. Im Gegensatz zur Master-Slave-Architektur, in der nur der Mastercontroller die Spannung allein erzeugt, kann im Master-Master-Betrieb gemäß der vorliegenden Erfindung jedes einzelne Energiespeichermodul das Bussystem mit entsprechender Spannung versorgen.

Erfindungsgemäß kann vorgesehen sein, dass die Kontrolleinheit einen Mikroprozessor und einen analogen Frontendschaltkreis aufweist, wobei der Frontendschaltkreis mindestens eine der folgenden Betriebsparameter des jeweiligen Energiespeichermoduls misst: Strom, Temperatur, Spannung, wobei insbesondere das Energiespeichermodul eine Vielzahl an Einzelzellen aufweist, wobei der Frontendschaltkreis mindestens eine der folgenden Betriebsparameter der jeweiligen Einzelzelle misst: Strom, Temperatur, Spannung. Anhand des gemessenen Wertes beziehungsweise der gemessenen Werte kann die Kontrolleinheit den Ladezustand (SOC) des jeweiligen Energiespeichermoduls berechnen. Ebenfalls ist der "Verschleiß" des Energiespeichermoduls (SOH) aus dem gemessenen Betriebsparameter berechenbar. Anschließend kann die Kontrolleinheit die ermittelten und berechneten Werte dem Netzwerk sowie allen weiteren Kontrolleinheiten innerhalb des Batteriegesamtsystems mitteilen. Über eine entsprechende Logik kann die Kontrolleinheit entscheiden, inwieweit ihr Energiespeichermodul während eines Ladens oder eines Entladens der wiederaufladbaren Batterie zugeschaltet oder abgeschaltet werden soll.

Das erfindungsgemäße Netzwerk innerhalb des Batteriesystems kann derart gestaltet sein, dass jedes Energiespeichermodul mit jedem anderen Energiespeichermodul der gleichen Batterie und/oder einer weiteren Batterie über das Netzwerk in Datenkommunikation steht.

Bei einer erfindungsgemäßen Maßnahme kann für jede Kontrolleinheit eine elektrische Schaltung vorgesehen sein, die eine Energieübertragung vom jeweiligen Energiespeichermodul zum Bussystem sicherstellt, insbesondere dass die elektrische Schaltung ein DC-DC-Konverter ist, der die Schnittstelle zum Bussystem bildet. Zum Beispiel kann das Energiespeichermodul, das in einem Verbund in Reihe und/oder parallel zu den weiteren Energiespeichermodulen geschaltet sein kann, das Bussystem sowie weitere externe Komponenten mit Spannung versorgen. Ferner kann die Erfindung für jede Kontrolleinheit eine Sende- und Empfangseinheit umfassen, die mit dem Bussystem und/oder mit den Energiespeichermodulen des Verbundes innerhalb der Batterie beziehungsweise des Batteriesystems verbunden ist. Über die Sende- und Empfangseinheit, die beispielsweise ein Tranceiver sein kann, können die eigentlichen Daten zwischen den Kontrolleinheiten ausgetauscht werden.

Zweckmäßigerweise liegt eine galvanisch getrennte Busankopplung eines jeden Energiespeichermoduls vor, so dass für das Bussystem eine elektrisch isolierte Versorgungsspannung erzeugt werden kann. Um die Sicherheit des Gesamtsystems zu erhöhen kann eine Redundanz zur Überprüfung der Messung des Frontendschaltkreises vorgesehen sein. Das bedeutet, dass eine getrennte zweite Messung der genannten Betriebsparameter des jeweiligen Energiespeichermoduls, insbesondere der jeweiligen Einzelzellen des Energiespeichermoduls durchgeführt wird. Diese Messergebnisse werden mit den Messergebnissen des Frontendschaltkreises seitens der Kontrolleinheit verglichen.

In einer weiteren Ausführungsform der Erfindung besitzt jedes Energiespeichermodul eine Auswerte- und Steuerelektronik, die die zellspezifischen Funktionen, wie SOC/SOH-Bestimmung, eine Sicherheitsabschaltung, Symmetrierung der Einzelzellen sowie der Energiespeichermodule etc. realisiert. Die Kontrolleinheit kann mit einer derartigen Steuerelektronik ausgestattet sein, dass beispielsweise eine Initialisierungsphase für das jeweilige Energiespeichermodul im gesamten Batteriesystem erfolgt, bei der die Position des Energiespeichermoduls im Batteriesystem festgestellt wird und je nach Anzahl und Beschaffenheit des Energiespeichermoduls sowie der Batterie die Kontrolleinheit autark dem Netzwerk mitteilt, inwieweit ihr Energiespeichermodul sich dem Verbund der restlichen Energiespeichermodule zuschaltet oder abschaltet.

Vorteilhafterweise sind die Energiespeichermodule auswechselbar in der Batterie angeordnet. Bei der Batterie kann es sich zum Beispiel um eine Lithium-Ionen Batterie handeln, wobei die einzelnen Energiespeichermodule auswechselbar sind. Falls beispielsweise ein Modul fehlerhaft ist, beispielsweise da dieser den gewünschten Ladezustand nicht erreichen kann, ist es von Vorteil, dieses Energiespeichermodul durch ein funktionierendes Modul auszutauschen. Zum Beispiel kann es vorgesehen sein, dass die Batterie ein Kommunikationsmittel aufweist, das auf ein defektes Energiespeichermodul aufmerksam macht. Das Kommunikationsmittel kann in der Kontrolleinheit integriert sein. Vorteilhafterweise erfolgt die Kommunikation des Kommunikationsmittels über Funk.

In einer die Erfindung verbessernden Maßnahme kann vorgesehen sein, dass die Kontrolleinheit eine Sicherheitsabschaltung aufweist, wodurch das Energiespeichermodul, das in einem Verbund in Reihe und/oder Parallel zu den weiteren Energiespeichermodulen geschaltet ist, in oder aus dem Verbund schaltbar ist. Falls beispielsweise eine oder mehrere Energiespeichermodule den gewünschten Ladezustand des gesamten Verbundes der Batterie nicht aufweisen, kann die Sicherheitsabschaltung dafür sorgen, dass die "unsymmetrischen" Energiespeichermodule aus dem Verbund geschaltet werden. Je nach hinterlegter Logik kann selbstverständlich die Sicherheitsabschaltung dafür sorgen, dass einzelne Energiespeichermodule wieder zurück in den Verbund geschaltet werden.

Die Erfindung kann weiterhin vorsehen, dass jede Kontrolleinheit eine Schaltung zur Einzelzellen-Symmetrierung aufweist. Neben einer zuvor beschriebenen Intermodul-Symmetrierung, bei der während des Ladens oder Entladens der Batterie ein oder mehrere Energiespeichermodule in Abhängigkeit von dem Betriebsparameter und/oder dem Ladezustand und/oder dem Verschleiß durch die Sicherheitsabschaltung der Batterie zugeschaltet oder von der Batterie abgeschaltet werden, kann innerhalb des jeweiligen Energiespeichermoduls eine Einzelzellen-Symmetrierung erfolgen. Bei der Einzelzellen-Symmetrierung folgt eine Angleichung der Einzelzellen innerhalb des Energiespeichermoduls, in dem zum Beispiel ein oder mehrere Einzelzellen innerhalb des Energiespeichermoduls abgeschaltet werden. Hierbei kann die Einzelzellen-Symmetrierung nach einem intelligenten passiven Verfahren erfolgen.

Ferner wird die Aufgabe durch sämtliche Merkmale des unabhängigen Verfahrensanspruches gelöst. In den abhängigen Verfahrensansprüchen sind vorteilhafte Ausführungsformen offenbart.

Es ist auch ein Verfahren zur Überwachung eines Ladezustandes mindestens einer wiederaufladbaren Batterie innerhalb eines Batteriesystems vorgesehen mit mehreren in der Batterie enthaltenden Energiespeichermodulen, Kontrolleinheiten, wobei jedes Energiespeichermodul eine Kontrolleinheit aufweist, und einem Netzwerk, mit dem die Kontrolleinheiten miteinander derart verbunden sind, dass die Kontrolleinheiten in einer Master-Master-Systemarchitektur innerhalb des Netzwerkes kommunizieren.

Zweckmäßigerweise kann die Kontrolleinheit zumindest einen Betriebsparameter des Energiespeichermodul, insbesondere jeder Einzelzelle des Energiemoduls auslesen, aus dem der Ladezustand und/oder der Verschleiß des Energiespeichermodul, insbesondere der Einzelzelle berechnet wird. Das Auslesen erfolgt hierbei über einen Frontendschaltkreis. Falls ein Austausch eines Energiespeichermoduls erforderlich ist, wird das neu eingesetzte Energiespeichermodul über eine Initialisierungsphase im Gesamtnetzwerk angemeldet, wobei während der Initialisierungsphase das Energiespeichermodul seine Position im Batteriesystem und/oder in der Batterie feststellt. Gleichzeitig kann diese Position dem Gesamtnetzwerk mitgeteilt werden.

Vorteilhafterweise kann eine Intermodul-Symmetrierung vorgesehen ist, wobei während des Ladens oder Entladens der Batterie das Energiespeichermodul in Abhängigkeit von dem Betriebsparameter und/oder dem Ladezustand und/oder dem Verschleiß sich der Batterie über eine Sicherheitsabschaltung zuschaltet oder sich von der Batterie abschaltet. Zusätzlich/oder alternativ kann eine Einzelzellen-Symmetrierung vorgesehen sein, bei der während des Ladens oder Entladens der Batterie jede Einzelzelle in Abhängigkeit von ihrem Betriebsparameter ihrem Energiespeichermodul zuschaltbar oder abschaltbar ist. Je nach Anwendungsfall kann die Intermodul-Symmetrierung und die Einzelzellen-Symmetrierung zumindest teilweise parallel und/oder seriell erfolgen.

Eine Besonderheit des erfindungsgemäßen Verfahrens ist, dass das Netzwerk ein Bussystem aufweist, wobei das Energiespeichermodul in Abhängigkeit von dem Betriebsparameter und/oder dem Ladezustand und/oder dem Verschleiß das Bussystem mit Energie versorgt, wobei gleichzeitig das Energiespeichermodul der Batterie zugeschaltet oder der Batterie abgeschaltet sein kann. Das bedeutet, dass eine Sicherheitsabschaltung zwar ein oder mehrere Energiespeichermodule vom Verbund aller Energiespeichermodule einer Batterie herausschalten kann, jedoch die Kontrolleinheit des jeweiligen herausgeschalteten Energiespeichermoduls entscheiden kann, inwieweit das Bussystem weiterhin von dem herausgeschalteten Energiespeichermodul mit Energie versorgt wird.

Erfindungsgemäß kann ein unterer und/oder ein oberer Schwellwert bezogen auf den Betriebsparameter und/oder den Ladezustand und/oder den Verschleiß vorgesehen sein, wobei die Kontrolleinheit das Energiespeichermodul von der Batterie abschaltet, wenn einer der Schwellwerte während des Ladens oder Entladens der Batterie erreicht wird. Ebenfalls ist es möglich, dass beim Entladen der Batterie die Energiespeichermodule, die einen ungefähr gleichen Ladezustand (Abweichung < 5% - 10%) aufweisen, der gleichzeitig den größten Wert aller Energiespeichermodule innerhalb Batterie aufweist, der Batterie zugeschaltet werden und die übrigen Energiespeichermodule von der Batterie abgeschaltet werden. Weiterhin kann das erfindungsgemäße Verfahren vorsehen, dass beim Laden der Batterie die Energiespeichermodule, die einen ungefähr gleichen Ladezustand (Abweichung < 5% - 10%) aufweisen, der gleichzeitig den geringsten Wert aller Energiespeichermodule innerhalb der Batterie aufweist, der Batterie zugeschaltet werden und die übrigen Energiespeichermodule von der Batterie abgeschaltet werden.

Weitere Vorteile, Merkmale und Einzelheiten der Erfindung ergeben sich aus der nachfolgenden Beschreibung, in der unter Bezugnahme auf die Zeichnungen nähere Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: einen Ausschnitt eines Batteriesystems mit einer wiederaufladbaren Batterie, die mehrere Energiespeichermodule aufweist, die mit einem Bussystem verbunden sind,
- Figur 2: ein mögliches Ausführungsbeispiel eines Verbundes von Energiespeichermodulen einer Batterie,
- Figur 3: eine weitere Darstellung von Energiespeichermodulen, die mit einem Bussystem verbunden sind,
- Figur 4: eine weitere Darstellung eines Verbundes von Energiespeichermodulen einer wiederaufladbaren Batterie,
- Figur 5: ein weiteres Ausführungsbeispiel eines Energiespeichermoduls mit einer Kontrolleinheit, die mit einem Bussystem verbunden ist,
- Figur 6: eine mögliche Ausführungsvariante einer Intermodul-Symmetrierung und
- Figur 7: eine vereinfachte Darstellung eines möglichen Verfahrens zur Überprüfung, inwieweit ein Energiespeichermodul einer Batterie in seiner parallelen Anordnung der Batterie zuzuschalten ist.

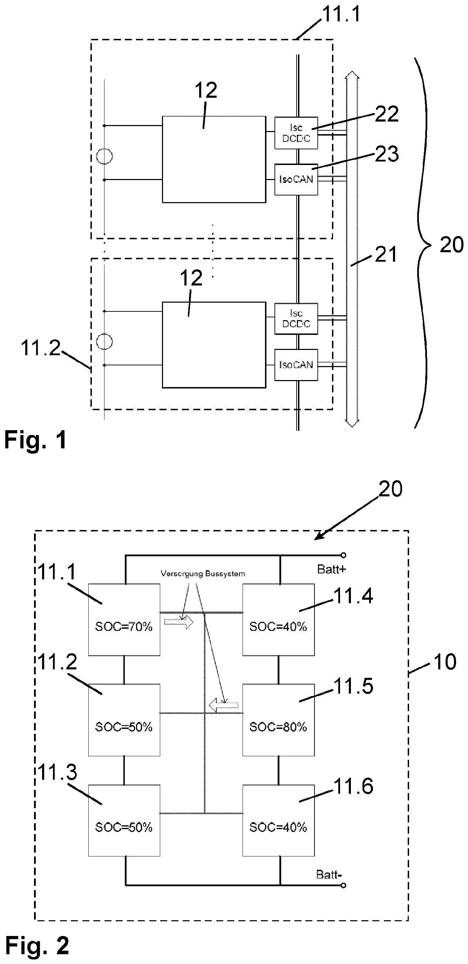

In Figur 1 ist ein Bereich eines Batteriesystems gezeigt, welches mindestens eine wiederaufladbare Batterie 10 umfasst. Die Batterie 10 weist mehrere in einem Verbund angeordnete Energiespeichermodule 11 auf. Die Energiespeichermodule 11 können in Reihe und/oder parallel zu den weiteren Energiespeichermodulen 11 geschaltet sein. Die Energiespeichermodule 11 können auf Energiespeicher-Gerätetechnologien, wie etwa Metallhydrid- (zum Beispiel Ni-MH), Lithium-Ionen- und Lithium-Polymerzellen-Technologien basieren. Jedes Energiespeichermodul 11.1, 11.2 weist eine Kontrolleinheit 12 auf, wobei die Kontrolleinheiten 12 in einem Netzwerk 20 miteinander verbunden sind, so dass eine Kommunikation zwischen den Energiespeichermodulen 11.1, 11.2 der wiederaufladbaren Batterie 10 möglich ist. Erfindungsgemäß sind die Kontrolleinheiten 12 gemäß Figur 1 bis Figur 7 in einer Master-Master-Systemarchitektur innerhalb des Netzwerkes 20 eingebunden.

Jede Kontrolleinheit 12 eines jeden Energiespeichermoduls 11.1, 11.2 weist eine elektrische Schaltung 22 auf, die eine Energieübertragung vom jeweiligen Energiespeichermodul 11.1, 11.2 zu einem Bussystem 21 des Netzwerkes 20 sicherstellt. Im vorliegenden Ausführungsbeispiel ist die elektrische Schaltung 22 ein DC-DC-Konverter 22, der gleichzeitig mit einer Isolierung zwischen dem Bussystem 21 und dem Energiespeichermodul 11.1, 11.2 ausgeführt ist. Über den Iso-DC-DC-Konverter erfolgt eine Energieübertragung vom jeweiligen Energiespeichermodul 11 zum Bussystem 21.

Zudem ist eine Sende- und Empfangseinheit 23 vorgesehen, die zur Datenübertragung zwischen dem jeweiligen Energiespeichermodul 11 und dem Bussystem 21 wirkt. Diese Sende- und Empfangseinheit 23 ist ebenfalls mit einer Isolierung ausgeführt, so dass das Energiespeichermodul 11 zum Bussystem 21 galvanisch getrennt ist.

In Figur 2 sind beispielhaft sechs Energiespeichermodule 11 in einem Verbund in Reihe und parallel geschaltet. Der besondere Vorteil der Master-Master-Systemarchitektur, innerhalb dieser die Kontrolleinheiten innerhalb des Netzwerkes verbunden sind, ist, dass ohne übergeordnete Steuergeräte ein Batteriemanagement effizient zwischen den einzelnen Energiespeichermodulen realisierbar ist. Über eine entsprechende Logik können hierbei die Kontrolleinheiten innerhalb jedes Energiespeichermoduls 11 selbst entscheiden, inwieweit das jeweilige Energiespeichermodul beim Entladen und/oder Laden der Batterie 10 zugeschaltet oder dem Verbund der Energiespeichermodule 11 abgeschaltet werden soll. Hierdurch kann ein sicheres Parallelisieren von Energiespeichermodulen ohne ein vorheriges Angleichen des Ladezustandes erzielt werden. In Figur 2 wird beispielhaft gezeigt, dass das Modul 11.1 sowie 11.5 den höchsten Ladezustand (SOC) aufweisen. Über das Netzwerk 20 übermitteln alle Kontrolleinheiten jedes Energiespeichermoduls 11.1 bis 11.6 die Ladezustände. Eine hinterlegte Logik kann nun vorsehen, dass lediglich die Module 11.1 und 11.5 das Bussystem 21 mit Energie versorgen. Gleichzeitig stellen die verbleibenden Module 11.2, 11.3, 11.4, 11.6 die Spannungsversorgung des Bussystems 21 ein. Da die Module 11.1 und 11.5 nun die Hauptlast tragen, verringert sich ihr Ladezustand und eine Intermodul-Symmetrierung setzt ein. Wenn nun die Module 11.1 und 11.5 den Ladezustand von 50 % erreicht haben, kann beispielhaft die Logik derart programmiert sein, dass zur Spannungsversorgung des Bussystems 21 die Module 11.1, 11.2, 11.3 und 11.5 zum Einsatz kommen.

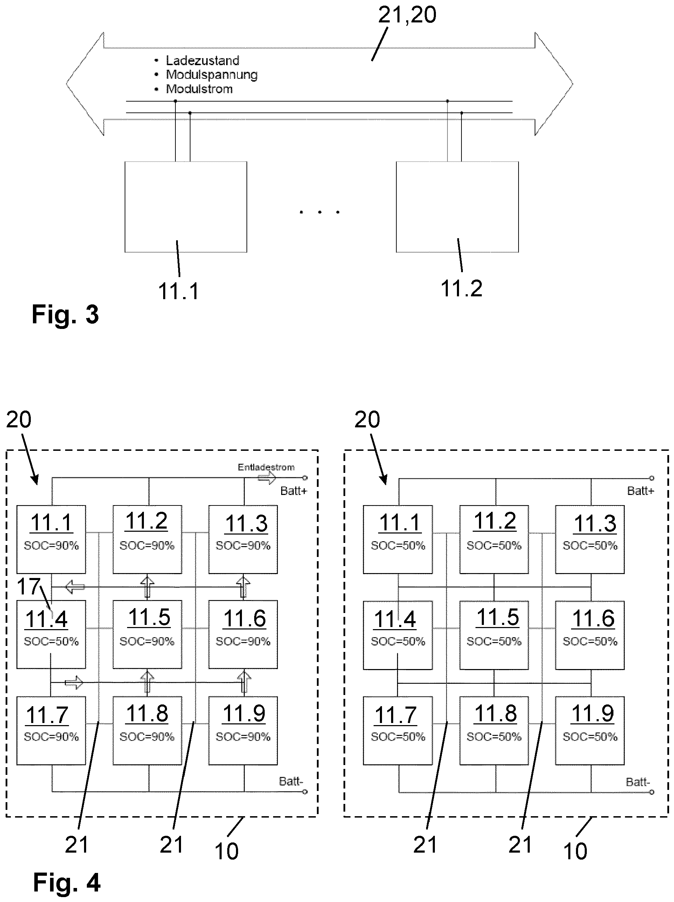

In Figur 3 ist schematisch der Verbund an Energiespeichermodulen 11.1, 11.2 gezeigt, die in Reihe und/oder parallel zueinander geschaltet sein können. Hierbei sind eine Vielzahl an Energiespeichermodulen (Anzahl größer 2) denkbar. Die Module 11 sind mit dem Bussystem 21 verbunden, wobei diverse Informationen, Daten zwischen den Kontrolleinheiten eines jeden Energiespeichermoduls 11 über das Netzwerk 20, insbesondere das Bussystem 21 ausgetauscht werden können. Hierbei ist es denkbar, dass die Kontrolleinheit Betriebsparameter eines jeden Energiespeichermoduls 11 ermittelt und dem Netzwerk 20 mitteilt, wobei die Betriebsparameter beispielsweise der Modulstrom, die Temperatur, die Modulspannung oder der Ladezustand (SOC/SOH) sein kann.

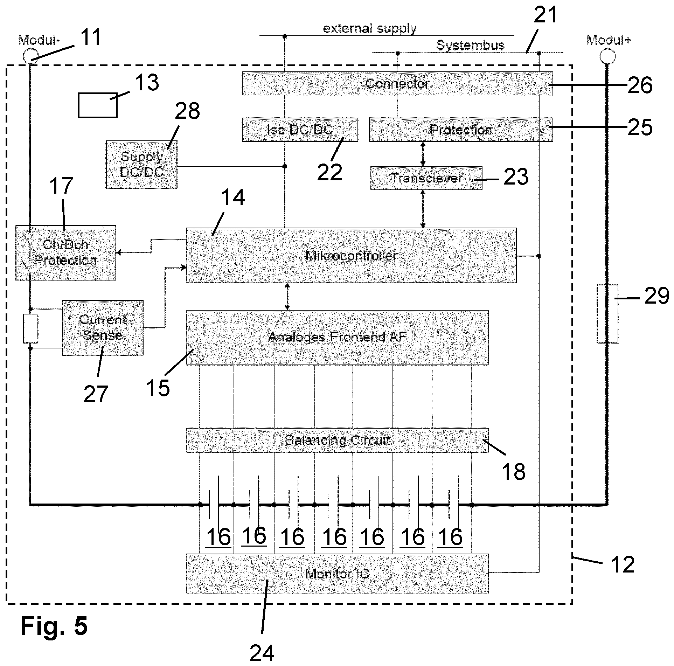

In Figur 4 ist schematisch ein Verbund an Energiespeichermodulen 11.1 bis 11.9 gezeigt, die sowohl parallel als auch in Reihe zueinander geschaltet sind. Hierbei befindet sich die Batterie 10 während des Entladevorganges. Bis auf das Modul 11.4, das einen Ladezustand von 50 % aufweist, weisen die restlichen Energiespeichermodule 11.1 bis 11.3 sowie 11.5 bis 11.9 einen Ladezustand von 90 % auf. Nachdem die Kontrolleinheiten jedes Energiespeichermoduls 11 ihre Betriebsgrößen, insbesondere den Ladezustand allen Energiespeichermodulen 11 der Batterie 10 mitgeteilt haben, kann die Kontrolleinheit des Moduls 11.4 entscheiden, dass aufgrund ihres niedrigen Ladezustandes sie vom Verbund der Energiespeichermodule 11 sich heraus schaltet. Dennoch ist es möglich, dass das Modul 11.4 weiter das Bussystem 21 mit Energie versorgt. Im vorliegenden Fall, entscheidet die Logik der Kontrolleinheit des Moduls 11.4 sowie des gesamten Batteriesystems, dass auch die Energieversorgung des Bussystems 21 nicht durch das Modul 11.4 aufrecht erhalten wird. Erst wenn die Module 11.1 bis 11.3 sowie 11.5 bis 11.9 den Ladezustand von 50 % erreicht haben, entscheidet die Kontrolleinheit des Moduls 11.4, dass das Modul 11.4 dem Verbund aller Energiespeichermodule 11 zugeschaltet wird. Dieses stellt in vereinfachter Form eine Intermodul-Symmetrierung innerhalb der Batterie dar, wobei während des Ladens oder des Entladens der Batterie 10 ein oder mehrere Energiespeichermodule 11 in Abhängigkeit von Betriebsparametern, insbesondere dem Ladezustand zu der Batterie 10 zugeschaltet oder von der Batterie 10 abgeschaltet werden können. Die Zuschaltung oder Abschaltung kann beispielsweise durch eine Sicherheitsabschaltung 17 erfolgen, die schematisch in Figur 4 sowie in Figur 5 gezeigt ist.

In Figur 5 ist schematisch ein Energiespeichermodul 11 gezeigt, das mit einer Kontrolleinheit 12 ausgestattet ist. Die Kontrolleinheit 12 weist einen Mikroprozessor/Mikrokontroller 14 auf, der mit einem analogen Frontendschaltkreis 15 verbunden ist. Der analoge Frontendschaltkreis 15 ist mit einer Vielzahl an Einzelzellen 16 des Energiespeichermoduls 11 verbunden und kann folgende Betriebsparameter der jeweiligen Einzelzelle 16 messen: Strom, Temperatur, Spannung etc.. Anhand der gemessenen Betriebsparameter errechnet die Kontrolleinheit 12 beispielsweise den Ladezustand des Energiespeichermoduls 11.

Ferner ist eine Redundanz 24 zur Überprüfung der Messungen des Frontendschaltkreises 15 vorgesehen. Die Redundanz 24 teilt die Überprüfungsmessergebnisse ebenfalls dem Mikroprozessor 14 der Kontrolleinheit 12 mit. Wie in Figur 1 bereits beschrieben, ist die Kontrolleinheit 12 über einen DC-DC-Konverter 22 sowie eine Sende-Empfangseinheit 23 mit einem Bussystem 21 verbunden. Bei dem DC-DC-Konverter 22 ist die Isolierung im Bauelement bereits integriert (ISO-DC-DC). Die Isolierung zwischen der Sende- Empfangseinheit 23 und dem Bussystem 21 erfolgt durch ein separates Isolierungselement 25. Zwischen den Bauteilen 22, 23 und dem Bussystem 21 befindet sich ein Stecker 26, der für die entsprechende Verbindung sorgt.

Zudem erfolgt über das Bauteil 27 eine Strommessung, die innerhalb des Energiespeichermoduls 11 anliegt, wobei der entsprechende Wert dem Mikrokontroller 14 der Kontrolleinheit 12 mitgeteilt wird. Falls die Logik der Kontrolleinheit 12 ein Zuschalten beziehungsweise ein Abschalten des Energiespeichermoduls 11 vom Verbund aller Energiespeichermodule 11 innerhalb der Batterie 18 vorsieht, wird dieses durch die Sicherheitsabschaltung 17 realisiert. Unabhängig von einer Aktivierung oder Deaktivierung der Sicherheitsabschaltung 17 kann die Kontrolleinheit 12 entscheiden, inwieweit das Bussystem 21 mit Energie seitens des Energiespeichermoduls 11 versorgt wird. Das Bauteil 28 zeigt schematisch die Energiequelle zur Versorgung der elektrischen Schaltung 22. Zudem ist eine Hardwaresicherung 29 vorgesehen, bei der unabhängig von der Kontrolleinheit 12 eine Trennung des Energiespeichermoduls 11 vom Verbund aller weiteren Energiespeichermodule 11 realisiert werden kann. In diesem Fall wäre ein Austausch des gesamten Energiespeichermoduls 11 notwendig.

Neben der bereits beschriebenen Intermodul-Symmetrierung (siehe beispielsweise Figur 2 und Figur 4), ist eine Einzelzellen-Symmetrierung innerhalb des Energiespeichermoduls 11 denkbar. Hierfür ist eine Schaltung 18 vorgesehen, die beispielsweise eine Zellsymmetrierung nach einem intelligenten passiven Verfahren durchführen kann. Anhand der vorliegenden Betriebsparameter der Einzelzellen 16 kann die Schaltung 18 beispielsweise eine oder mehrere Einzelzellen 16 aus dem Verbund aller Einzelzellen 16 des Energiespeichermoduls 11 hinein oder heraus schalten, um nach einer definierten Zeit eine Angleichung der Betriebsparameter aller Einzelzellen 16 zu erreichen.

Gemäß des gezeigten Ausführungsbeispiels in Figur 5 weist die Sicherheitsabschaltung 17 einen Halbleiterschalter zum Trennen des Energiespeichermoduls 11 auf.

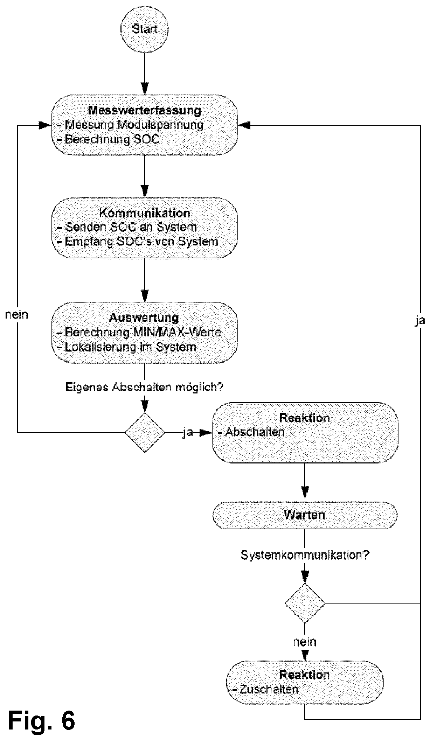

In Figur 6 ist schematisch gezeigt, wie in einem möglichen Ausführungsbeispiel die Kontrolleinheit 12 aus den Figuren 1 bis 5 mit dem Netzwerk 20 sowie mit den Kontrolleinheiten 12 aller weiteren Energiespeichermodule 11 der Batterie 10 kommunizieren kann. Im ersten Schritt erfolgt eine Messwerterfassung bezogen auf die Modulspannung innerhalb des Energiespeichermoduls, die über den Frontendschaltkreis durchgeführt wird. Anschließend berechnet die Kontrolleinheit 12 den Ladezustand (SOC). Anschließend erfolgt die Kommunikation der Kontrolleinheiten 12 innerhalb des Verbundes der Batterie 10, indem der Wert des Ladezustandes allen Kontrolleinheiten 12 gesendet wird, wobei gleichzeitig die jeweilige Kontrolleinheit 12 die Werte bezogen auf den Ladezustand aller Energiespeichermodule 11 innerhalb der Batterie 10 empfängt. Das Senden und Empfangen erfolgt durch die Sende- und Empfangseinheit 23 gemäß der Figur 1 und Figur 5. In einem nächsten Schritt wertet die Kontrolleinheit 12 jedes Energiespeichermodul 11 aus, inwieweit sie bezogen auf das Gesamtsystem eher einen hohen Wert oder einen niedrigen Wert aufweist. Entsprechend einer Logik erfolgt eine Abfrage, ob ein eigenes Abschalten des Energiespeichermoduls 11 möglich / oder sinnvoll ist. Falls eine Abschaltung nicht möglich ist, fängt das Verfahren wieder von vorne an, das bedeutet mit der Messwerterfassung, Kommunikation und der Auswertung. Falls jedoch eine Abschaltung möglich ist, wird über die Sicherheitsabschaltung 17 gemäß Figur 5 das Energiespeichermodul 11 vom Verbund aller Energiespeichermodule 11 abgeschaltet. Anschließend kann eine Systemkommunikation vorliegen, indem überprüft wird, wie viele Energiespeichermodule 11 parallel sich beispielsweise abgeschaltet haben. Eine mögliche Reaktion kann sein, dass nach einer gewissen Wartezeit die Kontrolleinheit 12 das Energiespeichermodul 11 wieder zuschaltet.

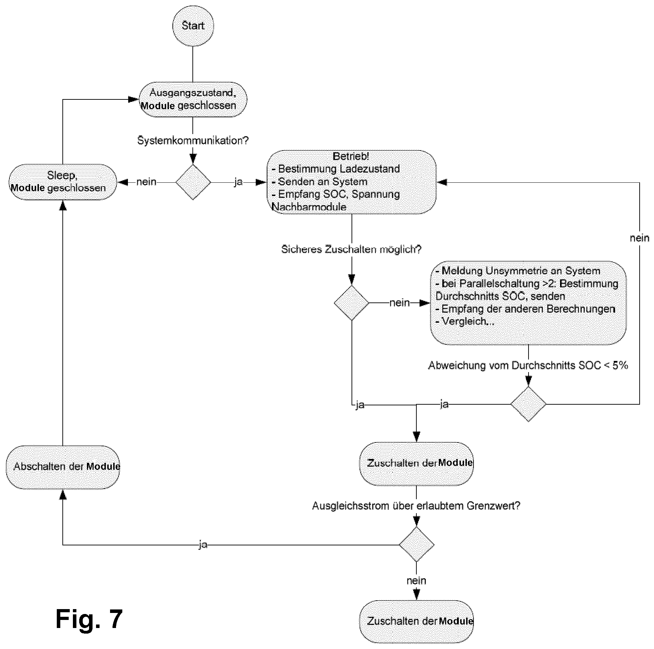

In Figur 7 wird in vereinfachter Darstellung das Verfahren für eine Zuschaltung paralleler Energiespeichermodule veranschaulicht. Im Ausgangszustand befinden sich die in Frage stehenden Module abgeschaltet von der Batterie. In Folge einer Systemkommunikation kann zunächst über das bereits beschriebene Verfahren der Ladezustand der jeweiligen Module bestimmt werden, wobei gleichzeitig die Kontrolleinheit die entsprechenden Parameter beziehungsweise den Ladezustand an das Netzwerk, insbesondere an alle Kontrolleinheiten sendet. Gleichzeitig erfolgt ein Empfang von Betriebsparametern der restlichen Kontrolleinheiten innerhalb des Verbundes der Batterie. Darüber hinaus empfängt die jeweilige Kontrolleinheit Werte wie Spannung, Temperatur, Strom etc. von ihren Nachbarenergiespeichermodulen innerhalb des Verbundes der Batterie. Im folgenden Schritt wird überprüft, ob ein sicheres Zuschalten möglich ist. Erfindungsgemäss sind die Kontrolleinheiten so ausgeführt, dass bei Abweichungen von einem Durchschnittswert des Ladezustandes aller Energiespeichermodule von weniger als 5 % die jeweilige Kontrolleinheit entscheidet, dass ihr Energiespeichermodul dem Verbund der Energiespeichermodule zugeschaltet werden kann. Falls die Abweichung größer als 5 % beträgt, erfolgt keine Zuschaltung. Falls der Ausgleichstrom des jeweiligen Energiespeichermoduls über einem erlaubten Grenzwert liegt, entscheidet die Kontrolleinheit, dass das Energiespeichermodul abgeschaltet wird, welches anschließend in einem sleep-Modus fällt. Falls der Ausgleichstrom unterhalb des erlaubten Grenzwertes liegt, verbleibt das Energiespeichermodul innerhalb des Verbundes aller Energiespeichermodule.

### Bezugszeichenliste

- 10: Batterie
- 11: Energiespeichermodul
- 11.1: Energiespeichermodul
- 11.2: Energiespeichermodul
- 11.3: Energiespeichermodul
- 11.4: Energiespeichermodul
- 11.5: Energiespeichermodul
- 11.6: Energiespeichermodul
- 11.7: Energiespeichermodul
- 11.8: Energiespeichermodul
- 11.9: Energiespeichermodul
- 12: Kontrolleinheit
- 13: Kommunikationsmittel
- 14: Mikroprozessor
- 15: Frontendschaltkreis
- 16: Einzelzelle
- 17: Sicherheitsabschaltung
- 18: Schaltung (Einzelzellen-Symmetrierung)

- 20: Netzwerk
- 21: Bussystem
- 22: Elektrische Schaltung, DC-DC-Konverter
- 23: Sende- und Empfangseinheit, Tranceiver
- 24: Redundanz
- 25: Isolierungselement
- 26: Stecker
- 27: Bauteil
- 28: Bauteil, Quelle
- 29: Hardwaresicherung

## Patentansprüche

1. Batteriesystem mit
mindestens einer wiederaufladbaren Batterie (10), die mehrere Energiespeichermodule (11) aufweist,
Kontrolleinheiten (12), wobei jedes Energiespeichermodul (11) eine Kontrolleinheit (12) aufweist, um den Ladezustand des Energiespeichermoduls (11) zu überwachen, und einem Netzwerk (20), mit dem die Kontrolleinheiten (12) miteinander derart verbunden sind, dass die Kontrolleinheiten (12) eine Master-Master-Systemarchitektur innerhalb des Netzwerkes (20) bilden, wodurch keine übergeordnete Kontrolleinheit (12) erforderlich ist,
wobei die Kontrolleinheit (12) jedes Energiespeichermoduls (11) dazu ausgelegt ist, autark zu entscheiden, inwieweit während des Ladens oder des Entladens der Batterie das Energiespeichermodul im Batteriesystem sich zuschaltet oder sich abschaltet,
und wobei die Kontrolleinheiten (12) so ausgeführt sind, dass bei Abweichungen von einem Durchschnittswert des Ladezustandes aller Energiespeichermodule (11) von weniger als 5 % die jeweilige Kontrolleinheit (12) entscheidet, dass ihr Energiespeichermodul (11) dem Verbund der Energiespeichermodule (11) zugeschaltet wird oder, falls die Abweichung größer als 5 % beträgt, keine Zuschaltung erfolgt.

2. Batteriesystem nach Anspruch 1,
**dadurch gekennzeichnet,**
**dass** das Netzwerk (20) ein Bussystem (21) aufweist, das von jedem Energiespeichermodul (11) mit Energie versorgbar ist.

3. Batteriesystem nach Anspruch 1 oder 2,
**dadurch gekennzeichnet,**
**dass** die Kontrolleinheit (12) einen Mikroprozessor und einen analogen Frontendschaltkreis (15) aufweist, wobei der Frontendschaltkreis (15) mindestens eine der folgenden Betriebsparameter des jeweiligen Energiespeichermoduls (11) misst: Strom, Temperatur, Spannung,
wobei insbesondere das Energiespeichermodul (11) eine Vielzahl an Einzelzellen (16) aufweist, wobei der Frontendschaltkreis (15) mindestens eine der folgenden Betriebsparameter der jeweiligen Einzelzelle (16) misst: Strom, Temperatur, Spannung.

4. Batteriesystem nach einem der vorhergehenden Ansprüche,
**dadurch gekennzeichnet,**
**dass** jedes Energiespeichermodul (11) mit jedem anderen Energiespeichermodul (11) der gleichen Batterie (10) und/oder einer weiteren Batterie (10) über das Netzwerk (20) in Datenkommunikation steht.

5. Batteriesystem nach einem der vorhergehenden Ansprüche,
**dadurch gekennzeichnet,**
**dass** für jede Kontrolleinheit (12) eine elektrische Schaltung (22) vorgesehen ist, die eine Energieübertragung vom jeweiligen Energiespeichermodul (11) zum Bussystem (21) sicherstellt, insbesondere dass die elektrische Schaltung (22) ein DC-DC-Konverter (22) ist, der die Schnittstelle zum Bussystem (21) bildet.

6. Batteriesystem nach einem der vorhergehenden Ansprüche,
**dadurch gekennzeichnet,**
**dass** eine Redundanz (24) zur Überprüfung der Messung des Frontendschaltkreises (15) vorgesehen ist und/oder dass die Kontrolleinheit (12) eine Auswerteeinheit und eine Steuerelektronik aufweist.

7. Batteriesystem nach einem der vorhergehenden Ansprüche,
**dadurch gekennzeichnet,**
**dass** die Energiespeichermodule (11) auswechselbar in der Batterie (10) angeordnet sind und/oder dass die Batterie (10) ein Kommunikationsmittel (13) aufweist, das auf ein defektes Energiespeichermodul (11) aufmerksam macht.

8. Batteriesystem nach einem der vorhergehenden Ansprüche,
**dadurch gekennzeichnet,**
**dass** die Kontrolleinheit (12) eine Sicherheitsabschaltung (17) aufweist, wodurch das Energiespeichermodul (11), das in einem Verbund in Reihe und/oder Parallel zu den weiteren Energiespeichermodulen (11) geschaltet ist, in oder aus dem Verbund schaltbar ist und/oder
**dass** für jede Kontrolleinheit (12) eine Sende- und Empfangseinheit (23) vorgesehen ist, die mit dem Bussystem (21) und/oder mit den Energiespeichermodulen (11) des/eines Verbundes verbunden ist.

9. Batteriesystem nach einem der vorhergehenden Ansprüche,
**dadurch gekennzeichnet,**
**dass** die Sende- und Empfangseinheit (23) und/oder die elektrische Schaltung (22) galvanisch zum Bussystem (21) getrennt sind und/oder dass jede Kontrolleinheit (12) eine Schaltung (18) zur Einzelzellen-Symmetrierung aufweist.

10. Verfahren zur Überwachung eines Ladezustandes mindestens einer wiederaufladbaren Batterie (10) innerhalb eines Batteriesystem mit mehreren in der Batterie (10) enthaltenden Energiespeichermodulen (11), Kontrolleinheiten (12), wobei jedes Energiespeichermodul (11) eine Kontrolleinheit (12) aufweist, um den Ladezustand des Energiespeichermoduls (11) zu überwachen, und
einem Netzwerk (20), mit dem die Kontrolleinheiten (12) miteinander derart verbunden sind, dass die Kontrolleinheiten (12) in einer Master-Master-Systemarchitektur innerhalb des Netzwerkes (20) kommunizieren, wodurch keine übergeordnete Kontrolleinheit (12) erforderlich ist,
wobei die Kontrolleinheit (12) jedes Energiespeichermoduls (11) dazu ausgelegt ist, autark zu entscheiden, inwieweit während des Ladens oder des Entladens der Batterie das Energiespeichermodul im Batteriesystem sich zuschaltet oder sich abschaltet,
und wobei die Kontrolleinheiten (12) so ausgeführt sind, dass bei Abweichungen von einem Durchschnittswert des Ladezustandes aller Energiespeichermodule (11) von weniger als 5 % die jeweilige Kontrolleinheit (12) entscheidet, dass ihr Energiespeichermodul (11) dem Verbund der Energiespeichermodule (11) zugeschaltet wird oder, falls die Abweichung größer als 5 % beträgt, keine Zuschaltung erfolgt.

11. Verfahren nach Anspruch 10,
**dadurch gekennzeichnet,**
**dass** die Kontrolleinheit (12) zumindest einen Betriebsparameter des Energiespeichermoduls (11), insbesondere jeder Einzelzelle (16) des Energiespeichermoduls (11) auslesen, aus dem der Ladezustand und/oder der Verschleiß des Energiespeichermoduls (11), insbesondere der Einzelzelle (16) berechnet werden/wird.

12. Verfahren nach den Ansprüchen 10 oder 11,
**dadurch gekennzeichnet,**
**dass** während einer Initialisierungsphase die Energiespeichermodule (11) ihre Position im Batteriesystem und/oder in der Batterie (10) feststellen und/oder dass eine Intermodul-Symmetrierung vorgesehen ist, wobei während des Ladens oder Entladens der Batterie (10) das Energiespeichermodul (11) in Abhängigkeit von dem Betriebsparameter und/oder dem Ladezustand und/oder dem Verschleiß sich der Batterie (10) über eine Sicherheitsabschaltung (17) zuschaltet oder sich von der Batterie (10) abschaltet.

13. Verfahren nach einem der vorhergehenden Ansprüche,
**dadurch gekennzeichnet,**
**dass** eine Einzelzellen-Symmetrierung vorgesehen ist, bei der während des Ladens oder Entladens der Batterie (10) jede Einzelzelle (16) in Abhängigkeit von ihrem Betriebsparameter ihrem Energiespeichermodul (11) zuschaltbar oder abschaltbar ist und/oder
**dass** die Intermodul-Symmetrierung und die Einzelzellen-Symmetrierung zumindest teilweise parallel und/oder seriell erfolgen und/oder
**dass** die Kommunikation zwischen den Energiespeichermodulen (11) über Broadcast erfolgt.

14. Verfahren nach einem der vorhergehenden Ansprüche,
**dadurch gekennzeichnet,**
**dass** das Netzwerk (20) ein Bussystem (21) aufweist, wobei das Energiespeichermodul (11) in Abhängigkeit von dem Betriebsparameter und/oder dem Ladezustand und/oder dem Verschleiß das Bussystem (21) mit Energie versorgt, wobei gleichzeitig das Energiespeichermodul (11) der Batterie (10) zugeschaltet oder der Batterie (10) abgeschaltet sein kann.

15. Verfahren nach einem der vorhergehenden Ansprüche,
**dadurch gekennzeichnet,**
**dass** ein unterer und/oder ein oberer Schwellwert bezogen auf den Betriebsparameter und/oder den Ladezustand und/oder den Verschleiß vorgesehen ist, wobei die Kontrolleinheit (12) das Energiespeichermodul (11) von der Batterie (10) abschaltet, wenn einer der Schwellwerte während des Ladens oder Entladens der Batterie (10) erreicht wird.

16. Verfahren nach einem der vorhergehenden Ansprüche,
**dadurch gekennzeichnet,**
**dass** beim Entladen der Batterie (10) die Energiespeichermodule (11), die einen gleichen Ladezustand aufweisen, der gleichzeitig den größten Wert aller Energiespeichermodule (11) innerhalb der Batterie aufweist, der Batterie (10) zugeschaltet werden und die übrigen Energiespeichermodule (11) von der Batterie (10) abgeschaltet werden.

17. Verfahren nach einem der vorhergehenden Ansprüche,
**dadurch gekennzeichnet,**
**dass** beim Laden der Batterie (10) die Energiespeichermodule (11), die einen gleichen Ladezustand aufweisen, der gleichzeitig den geringsten Wert aller Energiespeichermodule (11) innerhalb Batterie (10) aufweist, der Batterie (10) zugeschaltet werden und die übrigen Energiespeichermodule (11) von der Batterie (10) abgeschaltet werden.

18. Verfahren nach einem der vorhergehenden Ansprüche,
**dadurch gekennzeichnet,**
**dass** die Kontrolleinheit (12) eine Sicherheitsabschaltung (17) aufweist, die bei einem definierten Betriebsparameter und/oder Ladezustand und/oder Verschleiß das Energiespeichermodul (11) von der Batterie (10) abschaltet, und/oder dass jede Kontrolleinheit (12) zyklisch dem Netzwerk (20) die ermittelten Betriebsparameter und/oder Ladezustand und/oder Verschleiß übermittelt.

19. Verfahren nach einem der vorhergehenden Ansprüche zum Betreiben eines Batteriesystems nach einem der Ansprüche 1 bis 9.

## Claims

1. Battery system, comprising:
at least one rechargeable battery (10) comprising multiple energy storage modules (11),
monitoring units (12), wherein each energy storage module (11) comprises a monitoring unit (12) in order to monitor the state of charge of the energy storage module (11), and
a network (20), to which the monitoring units (12) are interconnected in such a way that the monitoring units (12) form a Master/Master system architecture within the network (20), which is why no superordinate monitoring unit (12) is required,
wherein the monitoring unit (12) of each energy storage module (11) is adapted to autonomously decide, to which extent the energy storage module in the battery system is connected or disconnected during charging or discharging of the battery,
and wherein the monitoring units (12) are configured such that if deviations from an average value of the state of charge of all energy storage modules (11) of less than 5 % occur, the respective monitoring unit (12) decides that its energy storage module (11) is connected to the group of energy storage modules (11), or, if the deviation is more than 5 %, no connection occurs.

2. Battery system according to claim 1,
**characterized in that**
the network (20) comprises a bus system (21), which can be supplied with energy by each energy module (11).

3. Battery system according to claim 1 or claim 2,
**characterized in that**
the monitoring unit (12) comprises a microprocessor and an analogous front end circuit (15), wherein the front end circuit (15) measures at least one of the following operating parameters of the respective energy storage module (11):
current, temperature, voltage,
wherein in particular the energy storage module (11) comprises a plurality of individual cells (16), wherein the front end circuit (15) measures at least one of the following operating parameters of the respective individual cell (16): current, temperature, voltage.

4. Battery system according to one of the preceding claims,
**characterized in that**
each energy storage module (11) is in data communication, via the network (20), with each of the other energy storage modules (11) of the same battery (10) and/or of another battery (10).

5. Battery system according to one of the preceding claims,
**characterized in that**
an electric circuit (22) is provided for each monitoring unit (12), which ensures an energy transfer from the respective energy storage module (11) to the bus system (21), in particular **in that** the electric circuit (22) is a DC/DC converter (22) that constitutes the interface to the bus system (21).

6. Battery system according to one of the preceding claims,
**characterized in that**
a redundancy (24) is provided for checking the measuring of the front-end circuit (15), and/or that the monitoring unit (12) comprises an evaluation unit and control electronics.

7. Battery system according to one of the preceding claims,
**characterized in that**
the energy storage modules (11) are arranged in the battery (10) in an exchangeable manner and/or that the battery (10) comprises a communication means (13) which indicates a defective energy storage module (11).

8. Battery system according to one of the preceding claims,
**characterized in that**
the monitoring unit (12) comprises a security-disconnect (17), whereby the energy storage module (11), which is connected in a composite in series and/or in parallel to the further energy storage modules (11), can be connected to or disconnected from the group, and/or
that for each monitoring unit (12), a transceiver unit (23) is provided, which is connected to the bus system (21) and/or the energy storage modules (11) of the /a group.

9. Battery system according to one of the preceding claims,
**characterized in that**
the transceiver unit (23) and/or the electrical circuit (22) are galvanically separated from the bus system (21), and/or that each monitoring unit (12) comprises a circuit (18) for individual-cell-balancing.

10. Method for monitoring a state of charge of at least one rechargeable battery (10) within a battery system, with
multiple energy storage modules (11) contained in the battery (10),
monitoring units (12), wherein each energy storage module (11) comprises a monitoring unit (12) in order to monitor the state of charge of the energy storage module (11), and
a network (20), to which the monitoring units (12) are interconnected in such a way that the monitoring units (12) communicate in a Master/Master system architecture within the network (20), which is why no superior monitoring unit (12) is required,
wherein the monitoring unit (12) of each energy storage module (11) is configured to autonomously decide to which extent the energy storage module in the battery system is connected or disconnected during charging or discharging of the battery,
and wherein the monitoring units (12) are configured such, that if deviations from an average value of the state of charge of all energy storage modules (11) of less than 5 % occurs, the respective monitoring unit (12) decides that its energy storage module (11) is connected to the group of energy storage modules (11), or, if the deviation is more than 5 %, no connection occurs.

11. Method according to claim 10,
**characterized in that**
the monitoring unit (12) reads out at least one operating parameter of the energy storage module (11), in particular of each individual cell (16) of the energy storage module (11), from which the state of charge and/or the wear of the energy storage module (11), in particular of the individual cell (16), is/are calculated.

12. Method according to one of claims 10 or 11,
**characterized in that**
during an initialization period, the energy storage modules (11) identify their positions in the battery system and/or in the battery and/or that an inter-module balancing is provided, wherein during the charging or discharging of the battery (10), the energy storage module (11) is connected to the battery (10) via a security-disconnect (17) or disconnected from the battery depending on the operating parameter and/or the state of charge and/or the wear.

13. Method according to one of the preceding claims,
**characterized in that**
an individual-cell balancing is provided, upon which during charging or discharging of the battery (10), each individual cell (16), depending on its operating parameter, can be connected to or disconnected from its energy storage module (11), and/or
that the inter-module balancing and the individual cell balancing are effected at least in part in parallel and/or serially and/or
that the communication between the energy storage modules (11) is effected via broadcast.

14. Method according to one of the preceding claims,
**characterized in that**
the network (20) comprises a bus system (21), wherein depending on the operating parameter and/or the state of charge and/or the wear, the energy storage module (11) supplies the bus system (21) with energy, wherein simultaneously the energy storage module (11) can be connected to the battery (10) or can be disconnected from the battery (10).

15. Method according to one of the preceding claims,
**characterized in that**
a lower and/or upper threshold value related to the operating parameter and/or the state of charge and/or the wear is provided, wherein the monitoring unit (12) disconnects the energy storage module (11) from the battery (10) if one of the threshold values is reached during charging or discharging of the battery (10).

16. Method according to one of the preceding claims,
**characterized in that**
during the discharging of the battery (10), the energy storage modules (11) that have a same state of charge, which at the same time has the highest value of all energy storage modules (11) within the battery, are connected to the battery (10) and the other energy storage modules (11) are disconnected from the battery (10).

17. Method according to one of the preceding claims,
**characterized in that**
during the charging of the battery (10), the energy storage modules (11) that have a same state of charge, which simultaneously has the smallest value of all energy storage modules (11) within the battery (10), are connected to the battery and the other energy storage modules (11) are disconnected from the battery (10).

18. Method according to one of the preceding claims,
**characterized in that**
the monitoring unit (12) comprises a security-disconnect (17), which, in a defined operating parameter and/or state of charge and/or wear, disconnects the energy storage module (11) from the battery (10), and/or
that each monitoring unit (12) periodically transmits the determined operating parameters and/or state of charge and/or wear to the network (20).

19. Method according to one of the preceding claims for operating a battery system according to any one of claims 1 to 9.

## Revendications

1. Système de batterie, avec
au moins une batterie rechargeable (10), comprenant plusieurs modules de stockage d'énergie (11),
unités de contrôle (12), dans lequel chaque module de stockage d'énergie (11) présente une unité de contrôle (12), pour surveiller l'état de charge du module de stockage d'énergie (11), et un réseau (20), avec lequel les unités de contrôle sont liées les uns aux autres, de telle manière que les unités de contrôle (12) forment une architecture de système master/master dans le réseau (20), moyennant quoi aucune unité de control (12) supérieure est nécessaire, dans lequel l'unité de contrôle (12) de chaque module de stockage d'énergie (11) est configuré pour décider, de manière autonome, dans quelle mesure, pendant la charge ou la décharge de la batterie le module de stockage d'énergie (11) dans le système de batterie se connecte ou se déconnecte,
et dans lequel les unités de contrôle (12) sont configurées de sorte que, lors d'une variation de la valeur moyenne de l'état de charge de tous les modules de stockage d'énergie (11), inférieure à 5%, la respective unité de contrôle (12) décide que son module de stockage d'énergie (11) sera raccordé à l'ensemble des modules de stockage d'énergie (11), ou, si la variation est supérieure à 5%, aucune connexion s'effectue.

2. Système de batterie selon la revendication 1,
**caractérisé en ce que**
le réseau (20) présente un système de bus (21), qui peut être alimenté en énergie par chaque module de stockage d'énergie (11).

3. Système de batterie selon la revendication 1 ou 2,
**caractérisé en ce que**
l'unité de contrôle (12) comprend un micro-processeur et un circuit d'extrémité frontale analogique (15), dans lequel le circuit d'extrémité frontale (15) mesure au moins l'un des paramètres de fonctionnement suivant du respective module de stockage d'énergie (11) : courant, température, tension,
dans lequel en particulier le module de stockage d'énergie (11) présente une pluralité de cellules individuelles (16), dans lequel le circuit frontal (15) mesure au moins l'un des paramètres de fonctionnement de la respective cellule individuelle (16) : courant, température, tension.

4. Système de batterie selon l'une quelconque des revendications précédentes,
**caractérisé en ce que**
chaque module de stockage d'énergie (11) est en communication des données avec chaque autre module de stockage d'énergie (11) de la même batterie (10) et/ou une autre batterie (10) au moyen du réseau (20).

5. Système de batterie selon l'une quelconque des revendications précédentes,
**caractérisé en ce que**
pour chaque unité de contrôle (12) est prévue un circuit électrique (22) qui assure une transmission d'énergie du respective module de stockage d'énergie (11) au système de bus (21), en particulier que le circuit électrique (22) est un convertisseur CC/CC (22), qui constitue l'interface au système de bus (21).

6. Système de batterie selon l'une quelconque des revendications précédentes,
**caractérisé en ce que**
une redondance (24) est prévue pour vérifier la mesure du circuit frontal (15) et /ou **en ce que** l'unité de contrôle (12) présente une unité d'évaluation et une système électronique de commande.

7. Système de batterie selon l'une quelconque des revendications précédentes,
**caractérisé en ce que**
les modules de stockage d'énergie (11) sont disposés de manière échangeable dans la batterie (10) et/ou **en ce que** la batterie (10) présente un moyen de communication (13), qui signale un module de stockage d'énergie (11) défectueux.

8. Système de batterie selon l'une quelconque des revendications précédentes,
**caractérisé en ce que**
l'unité de contrôle (12) présente un arrêt de sécurité (17), par laquelle le module de stockage d'énergie (11), qui est branché en un ensemble en série et/ou parallèle aux autres modules de stockage d'énergie (11), est connectable dans ou hors de l'ensemble et/ou
**en ce que** pour chaque unité de contrôle (12) est prévue une unité de transmission et de réception (23), qui est connecté au système de bus (21) et/ou aux modules de stockage d'énergie (11) de l'/d'un ensemble.

9. Système de batterie selon l'une quelconque des revendications précédentes,
**caractérisé en ce que**
l'unité de transmission et de réception (23) et/ou le circuit électrique (22) sont séparés galvaniquement du système de bus (21) et/ou **en ce que** chaque unité de contrôle (12) présente un circuit (18) pour la symétrisation de cellules individuelles.

10. Procédé pour la surveillance d'un état de charge d'au moins une batterie (10) rechargeable au sein d'un système de batterie, avec plusieurs modules de stockage d'énergie (11) compris dans la batterie,
unités de contrôle (12), dans lequel chaque module de stockage d'énergie (11) présente une unité de contrôle (12), pour surveiller l'état de charge du module de stockage d'énergie (11),
et un réseau (20), avec lequel les unités de contrôle (12) sont liées entre elles de telle manière que les unités de contrôle (12) communiquent dans une architecture de système master/master dans le réseau (20), ainsi aucune unité de contrôle (12) supérieure n'est nécessaire,
dans lequel l'unité de contrôle (12) de chaque module de stockage d'énergie (11) est configuré pour pouvoir décider de manière autonome, dans quelle mesure, pendant la charge ou la décharge de la batterie, le module de stockage d'énergie dans le système de batterie se connecte ou se déconnecte, et dans lequel les unités de contrôle (12) sont configurées de telle manière, que lors des variations de la valeur moyenne de l'état de charge de tous les modules de stockage d'énergie (11) de moins de 5%, la respective unité de contrôle (12) décide que son module de stockage d'énergie (11) est connecté à l'ensemble des modules de stockage d'énergie (11), ou, si la variation est supérieure à 5%, aucune connexion s'effectue.

11. Procédé selon la revendication 10,
**caractérisé en ce que**
l'unité de contrôle (12) fait la lecture d'au moins un paramètre de fonctionnement du module de stockage d'énergie (11), en particulier de chaque cellule individuelle (16) du module de stockage d'énergie (11), à partir duquel sont/ estcalculé(s) l'état de charge et/ou l'usure du module de stockage d'énergie (11), en particulier de la cellule individuelle (16).

12. Procédé selon la revendication 10 ou 11,
**caractérisé en ce que**
pendant une phase d'initialisation, les modules de stockage d'énergie (11) identifient leur position dans le système de batterie et/ou dans la batterie (10) et/ou **en ce qu'**une symétrisation entre modules est prévue, dans lequel pendant la charge ou la décharge de la batterie (10), le module de stockage d'énergie (11), se connecte en fonction du paramètre de fonctionnement et/ou de l'état de charge et/ou l'usure à la batterie (10) au moyen d'un arrêt de sécurité (17) ou se déconnecte de la batterie (10).

13. Procédé selon l'une quelconque des revendications précédentes,
**caractérisé en ce que**
une symétrisation de cellule individuelle est prévue, lors de laquelle pendant la charge ou la décharge de la batterie (10) chaque cellule individuelle (16) peut, en fonction de son paramètre de fonctionnement être connecté ou déconnecté à/de son module de stockage d'énergie (11), et/ou en ce que la symétrisation entre modules et la symétrisation de cellule individuelle s'effectuent au moins partiellement parallèle et/ou en série et/ou en ce que la communication entre les modules de stockage d'énergie (11) s'effectue par radiodiffusion.

14. Procédé selon l'une quelconque des revendications précédentes,
**caractérisé en ce que**
le réseau (20) présente un système de bus (21), dans lequel le module de stockage d'énergie (11) alimente en fonction du paramètre de fonctionnement et/ou de l'état de charge et/ou l'usure, le système de bus (21) avec de l'énergie, dans lequel simultanément le module de stockage d'énergie (11) de la batterie (10) peut être connecté à la batterie (10) ou déconnecté de la batterie (10).

15. Procédé selon l'une quelconque des revendications précédentes,
**caractérisé en ce que**
une valeur seuil inférieure et/ ou supérieure par rapport au paramètre de fonctionnement et/ou l'état de charge et/ou l'usure est prévue, dans lequel l'unité de contrôle (12) déconnecte le module de stockage d'énergie (11) de la batterie (10), quand une des valeurs seuils est atteint pendant la charge ou la décharge de la batterie (10).

16. Procédé selon l'une quelconque des revendications précédentes,
**caractérisé en ce que**
à la décharge de la batterie (10) les modules de stockage d'énergie (11), qui présentent un même état de charge, qui présente également la plus grande valeur de tous les modules de stockage d'énergie (11) dans la batterie, sont connectés à la batterie (10) et les autres modules de stockage d'énergie (11) sont déconnectés de la batterie (10).

17. Procédé selon l'une quelconque des revendications précédentes,
**caractérisé en ce que**
au chargement de la batterie (10) les modules de stockage d'énergie (11), qui présentent un même état de charge, qui présente également la valeur la plus basse de tous les modules de stockage d'énergie (11) au sein de la batterie (10), sont connectés à la batterie (10) et les autres modules de stockage d'énergie (11) sont déconnectés de la batterie (10).

18. Procédé selon l'une quelconque des revendications précédentes,
**caractérisé en ce que**
l'unité de contrôle (12) présente un arrêt de sécurité (17), qui lors d'un paramètre de fonctionnement défini et/ou état de charge et/ou usure, déconnecte le module de stockage d'énergie (11) de la batterie (10), et/ou que chaque unité de contrôle (12) transmet, de manière cyclique, les paramètres de fonctionnement et/ou état de charge et/ou usure déterminé(e/s) au réseau (20).

19. Procédé selon l'une quelconque des revendications précédentes pour le fonctionnement d'un système de batterie selon l'une des revendications 1 à 9.
